# EUROPEAN PATENT APPLICATION

(11) **EP 2 390 820 A2**
(43) Date of publication of application: **30.11.2011**
(21) Application number: 11167722.5
(22) Date of filing: 26.05.2011
(51) Int. Cl.: G06K 9/00, G08B 13/196

(54) **Monitoring Changes in Behaviour of a Human Subject**

(30) Priority: 27.05.2010 GB 1008834
(71) Applicant: INFRARED INTEGRATED SYSTEMS LTD., Northampton NN4 9BG (GB)
(72) Inventor: Hollock, Stephen, Lechlade, Gloucestershire GL7 3ER (GB); Johnson, Neil, Northampton, NN7 3AS (GB); Cross, Nicola, Northampton, NN6 7QB (GB)
(74) Representative: Dawson, Elizabeth Ann

(57) **Abstract**

A system and method of identifying changes in behaviour of a human subject comprises monitoring the movements of the subject within a space using one or more sensors, processing signals from the sensor(s) to determine values for one or more parameters associated with one or more patterns of behaviour of the subject, using values for the one or more parameters accumulated over a period of time to establish one or more models of a typical pattern of behaviour for the subject, monitoring the ongoing behaviour of the subject to obtain current values for one or more of the parameters; and using the current values and the model(s) of a typical pattern of behaviour to identify atypical behaviour of the subject.

An alert may be generated if the current value of one or more of the parameters is outside the acceptable limit(s). Advantageously low resolution thermal imagers are used so as to minimise intrusiveness and invasion of privacy.

## Description

The present invention relates to a method and system for monitoring changes in the behaviour of a human subject and more importantly detecting changes in patterns of behaviour.

### Background

It is known to monitor the behaviour of people using CCTV. Algorithms are known for automatically alerting an operator to certain patterns of behaviour amongst individuals in an area being monitored. Such algorithms use knowledge of what is typical or acceptable behaviour in the population at large.

With increasing numbers of vulnerable people such as the elderly living alone it is desirable to be able to monitor their activity in order to determine changes in their individual patterns of behaviour that might indicate that they need more attention.

The invention to be described below has been devised as a response to this need but has other applications as the following description will show.

It is not desirable to use CCTV to monitor the activities of people in closed spaces since they reveal detailed information and are considered to invade the privacy of the individuals concerned.

### General

In one aspect there is provided in the following a method of monitoring behaviour of a subject comprising: monitoring the movements of the subject within a space using at least one sensor comprising a two dimensional array of thermal detector elements, processing signals from the sensor(s) to determine current values for one or more parameters associated with one or more patterns of behaviour of the subject, establishing one or more models of a pattern of subject behaviour for the subject and/or the space being monitored; and using the current values and the model(s) of a pattern of behaviour to identify aberrations from an established model for the subject and/or the space.

The parameters could be simple directly measurable parameters such as speed of movement, dwell times etc, other examples of which are described below. Alternatively they may be derivable only after signals from the detector elements have been accumulated. Such parameters might include for example probabilities that the subject has performed a particular act.

The use of an array of thermal detector elements, rather than, for example a video camera, is particularly important and will be discussed in more detail below.

The method may be used to determine aberration from an established pattern of behaviour for a subject or a space being monitored.

In one embodiment the step of using the current values and the established model(s) of a pattern of behaviour to identify aberrant behaviour includes determining whether the current value of one or more of the parameters is outside one or more preset limits.

In one embodiment the step of using the current values and the established model(s) of a pattern of behaviour to identify aberrant behaviour of the subject includes using the current values to provide an observed pattern of behaviour and comparing the observed pattern of behaviour with the established model of a behaviour pattern.

The method may comprise determining the probability that an observed pattern of behaviour is aberrant for the subject and/or the space and determining that the behaviour is aberrant if the probability is greater than a preset limit.

In some implementations the method may be used to monitor activity in a space. Consider for example a toilet cubicle. It is typical for a toilet cubicle to be occupied for no more than a certain amount of time. If this is exceeded it may indicate that a person has collapsed in the toilet and is in need of assistance. In this example it is suitable to establish a typical occupancy behaviour pattern for the space, i.e. the cubicle, and to detect aberrations from that pattern regardless of subject.

In other implementations the method may be used to monitor the activity of a subject in a particular environment such as an elderly person in his home. In that case the established model might be a typical behaviour pattern for a person of his age, or it might be a typical behaviour pattern for that subject observed over time. The method might begin with a generic behaviour pattern for a subject of a certain profile.

The established generic behaviour pattern, whether appropriate to a space or to a subject, might be modified over time based on observed activities of the particular subject in a particular space or any subject in a particular space to establish a subject-specific or space-specific model.

The determination of current values for one or more parameters associated with the subject may comprise compiling statistical data over time indicating the frequency of one or more subject behaviours in relation to multiple regions or points in the space whereby to ascertain a pattern of behaviour for the subject. An example of this will be described in the following. For a more detailed explanation of the compilation of data in this way attention is directed to European patent application10196951.7.

Similarly the establishing of one or more models of a pattern of subject behaviour for the subject and/or the space being monitored may comprise compiling statistical data over time indicating the frequency of one or more subject behaviours in relation to multiple regions or points in the space.

In other words the same technique may be used for the ongoing monitoring of activity in the space and the establishment of a model for the purpose of comparison.

The above-mentioned multiple points or regions in the space are preferably adjacent to each other and preferably combine to cover at least a contiguous area within the space and preferably but not necessarily the whole of the space.

The compilation of statistical data in this way can be done without providing instantaneous images of the subject and is therefore a particularly useful tool for monitoring the activities of a subject in a manner so as not to invade the privacy of the subject. The result is an "activity map". Aside from being useful in identifying aberrant behaviour, the activity map is useful for providing general information about the activities of an individual.

Thus, in another aspect there is provided in the following a method of monitoring behaviour of a subject comprising: monitoring the movements of the subject within a space using at least one sensor comprising a two dimensional array of thermal detector elements, processing signals from the sensor(s) to determine current values for one or more parameters associated with one or more behaviours of the subject, compiling statistical data over time indicating the occurrence of one or more subject behaviours and determining the distribution of the one or more subject behaviours over a contiguous area defining all or part of the space. In this implementation the behaviour of a single subject, rather than multiple subjects, is monitored.

In the simplest example the one or more subject behaviours comprise simply being present in a point or region in the space. It is therefore possible to build up a picture of how the subject uses the space.

The data thus compiled may be displayed to provide a convenient map indicating the level of activity of the subject in different parts of the space. Thus the method may comprise processing the data such that it may be rendered as an image in the form of a map representing the space.

One application of the "activity map" is as a tool for diagnosing illnesses. For example changes in behaviour of the type that might indicate the onset of dementia are discernible from an activity map. As will be explained in more detail below these might include an increased tendency to pace around a room, fidgeting (discernible from many movements at the same location for example), and changes in sleeping pattern. Frequent visits to the toilet (which a subject might not think unusual) might indicate a urinary tract infection.

Any of the methods described above may comprise using the statistical data to determine the probability of the subject performing one or more activities for multiple points or regions in the space. Thus a "probability map" may be generated for the space being monitored. An activity may be as simple as dwelling or remaining motionless at that point or region. This may be used in the establishment of a model of a pattern of subject behaviour. It may also be used in the monitoring of current behaviour. In the monitoring of current behaviour the probabilities will be used in deciding whether aberrant behaviour has occurred.

The reason for determining different probabilities for different points or regions in the scene is that the probability of a person spending 8 hours in bed is higher than the probability of a person spending 8 hours motionless in a kitchen.

It is also possible to generate different "probability maps" for different time periods such as day and night. Thus any of the methods described above may comprise determining the probability of the subject performing one or more activities for multiple points or regions in the space for multiple different time periods.

The identification of aberrant behaviour may thus comprise using different values of parameters to indicate aberrant behaviour for different points or regions in the scene.

Different values of parameters may be used to indicate aberrant behaviour for different time periods. For example 8 hours motionless in bed might be typical for night time hours but aberrant for day time hours. This can be taken into account.

In the preferred implementation atypical behaviour of a subject is identified. However other kinds of aberrant behaviour may be identified. For example individuals might be monitored to identify departures from other behaviour patterns such as required behaviours of employees. Suppose that staff in a working environment are required to perform certain activities at certain times. An established pattern of required behaviour of an individual might be used to determine aberrations from this pattern.

It should also be noted that the methods are not limited to the monitoring of human subjects and could equally well be used to monitor the behaviour of animals, for example, in a cost effective way.

In one preferred specific embodiment there is provided in the following a method of identifying changes in behaviour of a human subject comprising monitoring the movements of the subject within a space using one or more sensors, processing signals from the sensor(s) to determine values for one or more parameters associated with one or more patterns of behaviour of the subject, using values for the one or more parameters accumulated over a period of time to establish one or more models of a typical pattern of behaviour for the subject, monitoring the ongoing behaviour of the subject to obtain current values for one or more of the parameters; and using the current values and the model(s) of a typical pattern of behaviour to identify atypical behaviour of the subject.

Thus a pattern of behaviour for the individual is established and departures from this are noted.

In a very simple example atypical or aberrant behaviour can be determined from the current value of one or more parameters being outside one or more preset limits. Practical examples are likely to require more complex analysis of behaviour. What is more likely is that an observed pattern of behaviour will be compared to a model in order to determine that behaviour is atypical or aberrant. Furthermore the determination may involve determining the probability that an observed pattern of behaviour is atypical or aberrant for the subject and or the space and determining that the behaviour is atypical or aberrant if the probability is greater than a preset limit.

An alert may be generated in the event that atypical or aberrant subject behaviour is identified. Alerts at multiple levels may be provided depending on the significance of the aberration. For example in the case of a person being monitored at home, one level of alert might be determined to require a telephone or other call to the subject and a higher level of alert might be determined to require emergency care immediately.

There is also provided a system for identifying changes in behaviour of a human subject configured to perform the steps of any of the methods described above comprising one or more sensors, one or more processors for processing signals from the sensors and data storage for storing the one or more models of a typical pattern of behaviour. Such a system may comprise one or more outputs for transmitting information. Information may be transmitted to a human observer, for example via a visual display. In other embodiments information may be transmitted to remote apparatus.

There is also provided a computer readable medium comprising instructions that when executed by a processor in a system comprising one or more sensors and data storage cause the system to execute the steps of any of the methods described above.

For reasons to be explained below it is preferred that any sensor used to monitor the movements of the subject should provide very low resolution by comparison to a known CCTV camera. The number of detector elements in each sensor is preferably no more than 10,000. In some possible embodiments the number of elements is no more than 2000.

On the other hand there should be sufficient elements to be able to track movement rather than simply detect the presence or absence of an individual, as is possible with a simple PIR detector. This can be achieved with as few as 50 elements. Thus a preferred minimum number of detector elements is 50. A higher number such as 200 is preferred for some applications. Since the array will usually but not necessarily be square, in one embodiment the array preferably comprises at least 16 x 16 detector elements.

Closed circuit television cameras (CCTV) have been used in video surveillance but are often deemed unacceptable because of intrusiveness. In other words, they provide such detailed information that they are not thought to be acceptable to persons whose behaviour might need to be monitored. Possibly "fuzziness" could be created to degrade a sharper image in a CCTV image. However, it is now known that such "artificial" blurring of an original clear image is capable in certain circumstances of being reversed by sophisticated digital means. Therefore for reasons of privacy for the individual it is preferred that the source of the data to be processed is very low in resolution. Thus information is not stored in the first place and could not therefore be digitally extracted later. Thermal sensors are ideal for this purpose and have other advantages. A suitable thermal sensor is made up of a two dimensional array of infrared sensitive detector elements, preferably pyroelectric detectors with the number of elements in the array typically between 16x16 and 33x33, together with an optical lens which focuses an image of the scene onto the detector array. The sensor has readout means for monitoring signals from the detectors and means for interpreting such signals to determine the presence of selected targets and tracking their motion in time and space. The sensor has analysis means to further characterise this information as required for the invention described elsewhere. The preferred sensor is not chopped or shuttered to provide a comparison between a blank scene and the active scene to facilitate image difference processing (described elsewhere) but such a facility might be included in certain circumstances to assist in identification of, for example, stationary objects. A suitable sensor is described in EP-A-0853237.

Thus in one embodiment of any of the methods according to the invention the sensors use image difference processing to determine the position of objects in the space.

The preferred thermal sensors comprise arrays of thermal detector elements, e.g. pyroelectric detector elements, which produce images that are blurred (fuzzy) in space. This is due in part to the low resolution of the arrays and to the use of low-cost optics which have limited acuity, but also to the fact that each detector element shows only changes in the images. In addition, due to the nature of the material that receives the infra-red signal, the thermal signal 'bleeds' or diffuses laterally through the material of the infrared detector array, so adding to the blurring. In this way, the anonymity and privacy of the individual are maintained.

As will be described in more detail below, using the preferred sensor, the nature of the thermal image obtained from a person moving around in the field of view of a detector is such that there is no possibility of obtaining detail regarding what an individual looks like or is doing except in the most basic way.

Another advantage of thermal imagers over CCTV is that thermal detectors are able to work under varying light conditions including conditions that would make the use of CCTV extremely difficult. Working in the infra-red allows this system and methods to work easily under any indoor lighting conditions, including complete darkness.

Another advantage is that a pyroelectric detector sees only changes in the scene, so background clutter 'disappears', allowing the system to focus on the subjects of interest. This coupled with the fact that a low resolution sensor is preferred leads to a great saving in terms of data to be processed.

The system and methods to be described below can be used to monitor activities and/or determine that, for example, an aged, infirm or other vulnerable person or detainee has started to move, and can track that person around a space. Information relating to changes in behaviour can be used to generate a trigger for interested parties (clinicians, carers or family) that the person in question may need to be monitored more closely to ameliorate the consequences of undesirable occurrences (such as falls, repetitive pacing, wandering etc). The sensor(s) may be positioned in any location such as, hospital, care home, hospice, sheltered accommodation, private home, hostel, prison etc, and in any room therein (bedroom, bathroom, kitchen, toilet, lounge, hall, cell etc) and the data thus generated interpreted accordingly by the system software.

It will be appreciated from the foregoing that it is useful to obtain values for a variety of parameters associated with behaviour of the subject.

One of the parameters could indicate a general level of activity, for example amount or percentage of time spent moving or active as opposed to idle. This might be particularly useful in determining the progress of recovery of a person from an illness such as after the person has returned from a stay in hospital.

Another parameter which would also indicate a general level of activity would be average distance travelled between stops or rests, possibly within a specified time. For example, if a person used to travel large distances around an area without stopping and this declines, this could indicate a problem that requires investigation, particularly if the decline is sudden.

One of the parameters may comprise the speed of movement of the subject from one location to another. An alert can then be generated for example if the subject begins to walk more slowly than before.

One of the parameters may comprise an amount of time dwelling or motionless, possibly being determined with reference to a particular area within the space. This could be used to determine whether the subject is spending a larger (or smaller) amount of time sleeping at night. It might also indicate that the subject has fallen.

One of the parameters may comprise a number of repetitions of a particular activity. A person with dementia for example might take more frequent or fewer meals if he is not able to remember whether or when he has eaten.

One of the parameters may comprise frequency of movement of limbs whilst at a particular location. This could be used to determine whether the subject has developed an unusual habit of fidgeting which may present in persons with dementia and similar conditions who are not able to occupy themselves.

One of the parameters may comprise linearity of movement between locations within the space. It would then be possible to determine whether the subject was developing a reeling gait, which could indicate some kind of illness.

One of the parameters may comprise the speed of movement of the subject towards the ground. This would then enable the identification of a fall as opposed to the subject simply bending down to pick something up.

One of the parameters could comprise a number of repetitions of movement along a path within the space, which could be used to determine whether the subject had developed a habit of pacing. This is useful for the same reasons as recognising fidgeting.

The data available from the system to be described in more detail below could be presented in graphical form. Thus, for example, it would be possible to monitor in a convenient manner the rate of change or overall progress of change of any of the parameters. This could be linked to the provision of an alert so that an alert is generated if the rate of change of one or more of the parameters is outside one or more preset limits.

It will be clear from the foregoing that values obtained for parameters can be used to establish typical patterns of behaviour for a variety of types of behaviour including sleeping, fidgeting (some people naturally fidget more than others), speed of activity, pacing, repetition, dwelling (preferably with reference to certain locations) and many others.

It will be appreciated that the methods and systems to be described below are able to provide a rich set of data that will have many uses. This could be made available for review by a user, carer, other professional or family member. It might be provided over a network interface (e.g. LAN or WAN) to a browser or other application or web service.

### Description of Preferred Embodiments

Embodiments of the invention will now be described by way of example only and with reference to the accompanying drawings in which:
Figure 1 shows, for the purpose of comparison, a comparatively high resolution image from a high resolution thermal imaging camera;
Figure 2 is a schematic diagram showing a ceiling mounted sensor comprising an array of thermal detector elements with its associated field of view;
Figure 3 shows a typical "un-chopped" image produced by a 16x16 array in the arrangement of figure 2;
Figure 4 shows a "chopped" image of a face using a 16x16 thermal imager with image difference processing;
Figure 5 is a block diagram of the components of a system according to the invention;
Figure 6 is a flow chart illustrating a mode of operation of the system of figure 5;
Figure 7 is a plan view of a home for the purpose of illustrating an example implementation of the methods of the invention;
Figure 8 is an "activity map" showing the activity of an individual in the home illustrated in figure 7;
Figure 9 is a map showing the probability that if the individual stops in a location they will remain inactive there for greater than 30 seconds; and
Figure 10 is an alert time map for night time hours only showing the duration for which the individual would need to remain inactive to trigger an alert.

### Imaging System

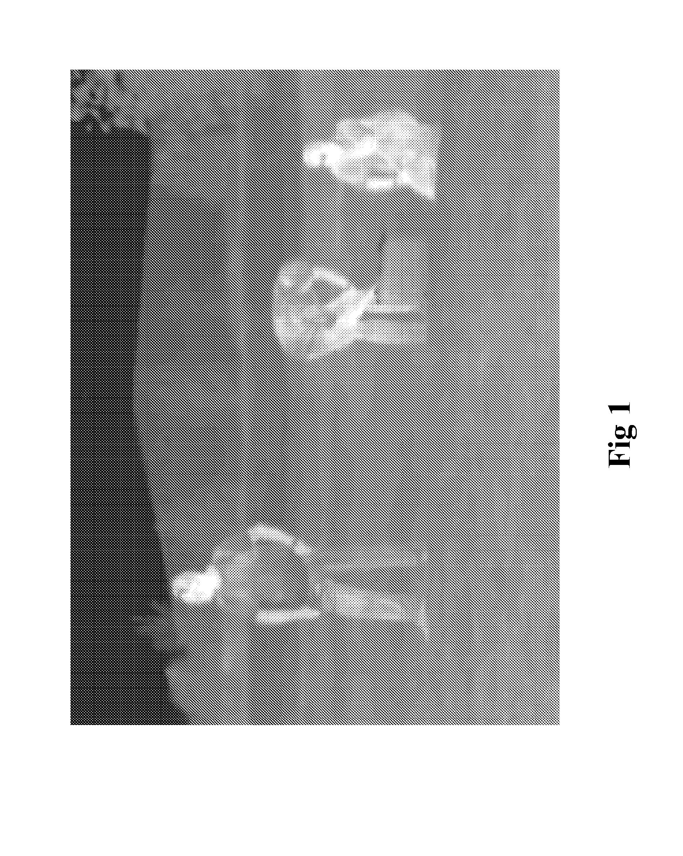

As noted above, it is preferred not to use high resolution imaging sensors. The reason for this will firstly be explained in more detail with reference to figures 1 to 4.

High quality thermal imagers produce movie-like images which will record the thermal scene in detail and in particular will "see" stationary targets in the field of view as well as moving objects. This, combined with a high resolution (pixels per unit field of view), makes facial identification possible and could display detailed behaviour (scratching, nose picking etc). An example image from a high resolution thermal imager is shown in figure 1. The sensor used to produce this image would typically have over 76000 detector elements.

The system and methods of the invention preferably use low element count thermal detector arrays which show insufficient detail to be intrusive. The arrays could use pyroelectric detectors or resistive bolometers for example.

Pyroelectric detectors produce a signal or image only when the incident infrared radiation is modulated, either by movement of the target or by means of a mechanical chopper. If a pyroelectric array "stares" through a suitable lens at a stationary scene, no image will be produced. In order to produce an image a mechanical chopper must be used with image difference processing to subtract the chopper-closed signal from the chopper-open signal.

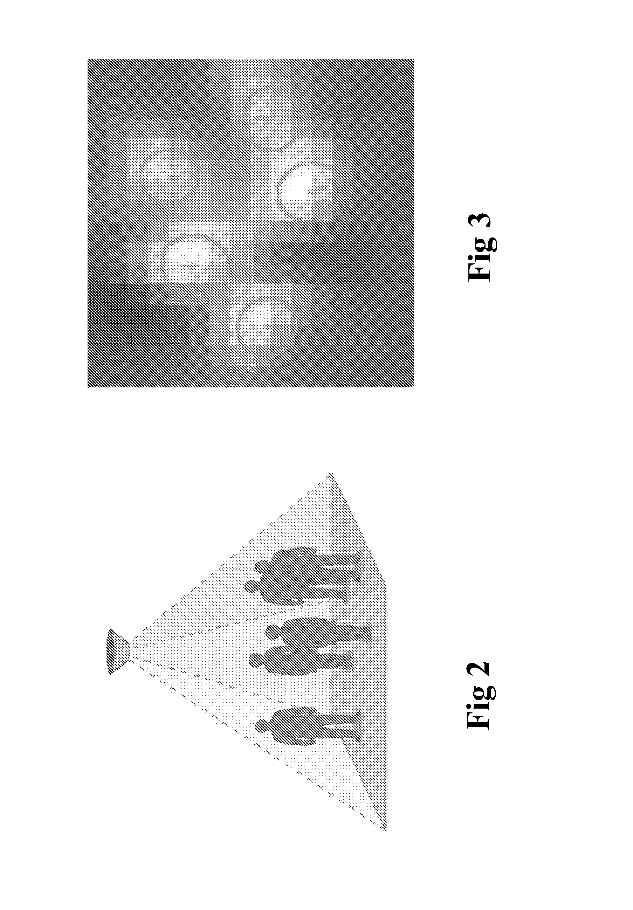

The system and methods of the invention can be implemented using low element count pyroelectric arrays without a chopper or image difference processing. As noted above pyroelectric detectors only respond to changes in the input radiation, so a moving target becomes a "blurred blob" in an otherwise uniform image. This "blob" can be tracked and identified as a target but only gross actions (walking, stopping, rapid speed changes etc) of the target can be seen. If the target remains motionless it disappears from the image altogether and it is by using a tracking algorithm that knowledge of the target's location can be retained and it can be picked up again when it moves. Figure 2 shows a ceiling-mounted 16x16 sensor viewing five people moving through the field of view, and figure 3 shows an un-chopped image obtained from the sensor to illustrate how little resolution is needed in order to implement the methods and system of the invention.

Notwithstanding the foregoing, for some applications it may be desirable to incorporate some image difference processing in order to collect limited additional information about fixed objects such as chairs and tables. By chopping the image on a pyroelectric detector it is possible to artificially create a time dependent signal and so stationary heat sources (targets) show up on the image. Even with such image difference processing low spatial resolution of sensors still ensures that the system is not undesirably intrusive.

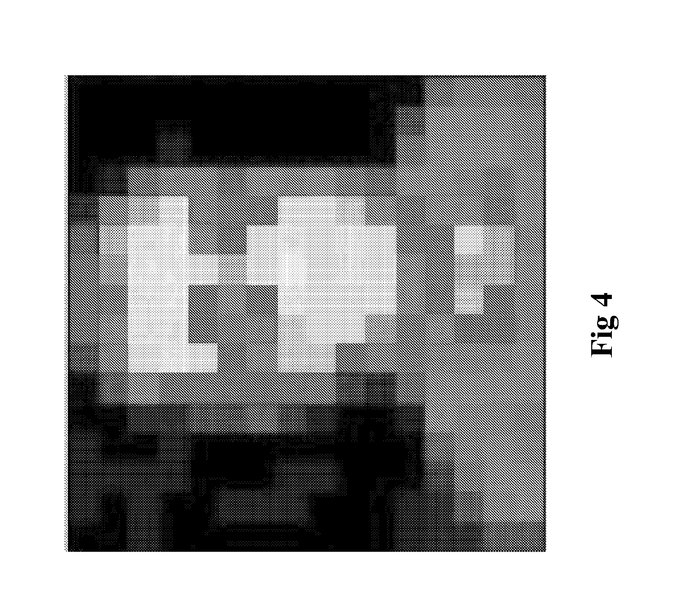

It is clear from figure 3 that only 16x16 elements lead to an extremely coarse picture. By comparison the "minimum" spatial resolution for a thermal imager of sufficient quality to "see" objects reasonably clearly is 160x120 and can be 384x288 or better as shown in figure 1. Chopped imagers with 16x16 elements still show targets as animated "blobs" as can be inferred from the chopped image shown in figure 4. Of course the actual level of detail available from a sensor depends on its field of view and distance between the sensor and the target. Typically imagers have a 20° field of view but can have as narrow as 10° or as wide as 35° or more. The wider the angle the greater the area of scene transferred to the imaging plane and for objects at a similar distance the detail will be lower. However for a wide field of view a target could stand much closer to the sensor to be seen more clearly.

### System Components and Implementation

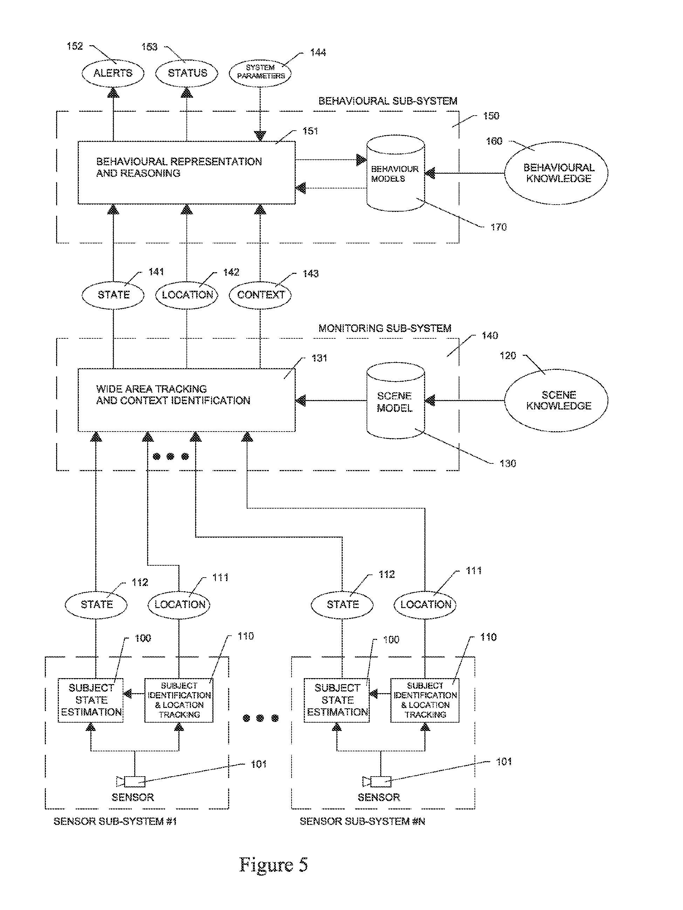

Referring now to figure 5, the illustrated system comprises one or more sensor sub-systems #1...#N which provide basic monitoring of individual areas within a monitored space. Each sensor sub-system comprises a sensor 101 comprising an array of thermal detectors together with subject identification, location and tracking system 110 and state estimation system 100. In this context, "identification" means determination that an individual to be tracked exists, rather than identification of one individual among multiple individuals. As shown in the figure, the state estimation system utilises information from the sensor 101 as well as the location and tracking system in order to estimate the state of the subject. Examples of "state" include speed of motion, orientation of body and "shape" of body (e.g. arms outstretched). Each sensor sub-system #1...#N provides rejection of noise and 'false-alarm' signals and outputs estimates of the location 111 and current state 112 of any subject within its field of view.

A monitoring sub-system 140 accepts subject location 111 and state 112 information from the one or more sensor sub-systems #1...#N. Sub-system 140 includes a scene model 130 compiled from a knowledge base 120 (which may be externally provided) of scene layout data. Wide area tracking and context identification processing 131 within sub-system 140 transforms the multiple location and state estimates from sensor sub-systems #1...#N into a more consistent, higher-level, description of the subject's state 141, location 142 within the entire monitored space, also adding contextual information 143 derived from the scene model 130. At this intermediate level, the system is also able to resolve issues associated with the presence of multiple subjects within the monitored area and provide more complex noise and 'false-alarm' rejection.

A behavioural sub-system 150 accepts high-level subject state 141, location 142, and context 143 information as well as system parameters 144 (such as the presence of a pet) and these are input to behavioural representation and reasoning processing 151. This information is used to create a database of behaviour models 170 indicative of the typical behaviour pattern of a subject possibly using externally provided data 160 relating to typical subject behaviours. Having created a database for the typical behaviour pattern of the subject, the behavioural representation and reasoning processing 151 determines whether the current behaviour is typical or otherwise. The behavioural sub-system then raises external alerts 152 or signals status information 153 as required. The high-level behavioural reasoning system will typically manage the adaptation of the stored behaviour model 170 via a machine learning mechanism such that the model adapts to better represent the behaviours of the monitored subject based on long-term observation. This system also allows slow evolution of the behaviour model 170 to allow for gradual changes in subject behaviour, seasonal habits, etc.

It should be noted that the behavioural sub-system 150 may also use data fed back to it from third parties such as carers in order to determine whether an alert should be generated.

The various "systems" illustrated in figure 5 may be implemented using any suitable apparatus as will be apparent to a person skilled in the art. The state estimation systems 100 and tracking systems 110 may take the form of one or more signal processors housed with the sensors or may be remote from the sensors. The remaining systems 140 and 150 would typically be remote from the sensors themselves and may take the form of one or more suitably programmed computers with associated memory.

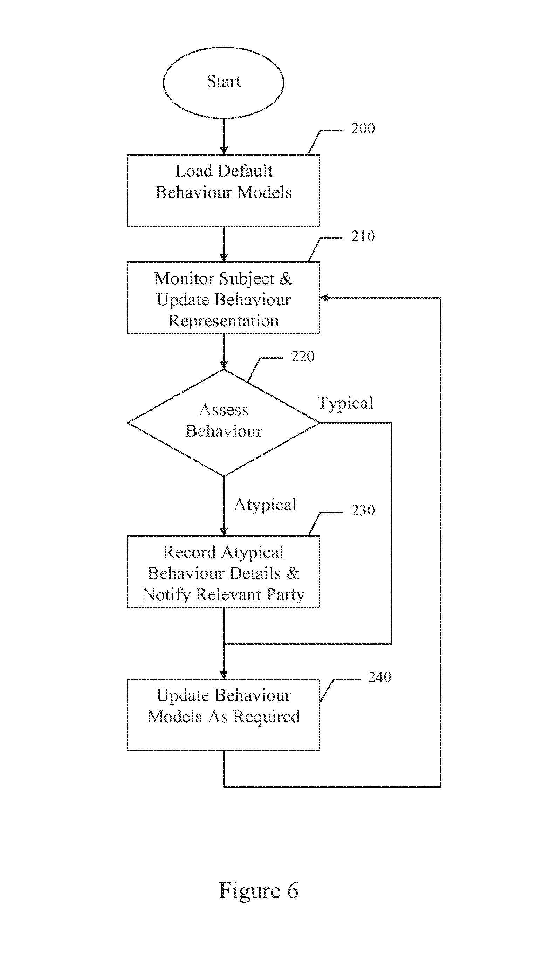

A mode of operation of the system of figure 5 is illustrated by the flow chart of Figure 6.

The system may be used to monitor periods of activity/inactivity and compare this with a map of typical periods of inactivity in different locations in the field of view. Typical periods will be derived from a learned pattern of behaviour derived from observation of the usual behaviour of the subject possibly starting from a set of preset values that define what is typical and what is not.

At step 200, default behaviour models are loaded. These could be based on externally provided data as indicated by item 160 in figure 5 and define a set of parameters or a set of behaviour models that are typical for an average person. Probably, no such individual exists, but this parameter/model set can be used as the starting point for a learning algorithm that 'tunes in' to what is typical for a particular individual. Alternatively the behaviour models loaded at step 200 could have been derived already by previously monitoring the behaviour of the subject.

The learnt pattern of behaviour and associated parameters will be used in the judgement of whether a current pattern of behaviour, deduced from detected movements of the subject, is a matter of interest in terms of a person's well-being. This typical benchmark would be created over an initial period of observation and would then be compared with observations in subsequent time periods.

The system monitors the activity of the subject in the space at step 210 and updates the behavioural representation 151 (figure 5).

At step 220 a decision is made as to whether the currently observed behaviour is "typical". The manner in which this may be done will be discussed in more detail below. If the behaviour of the subject is deemed to be typical at step 220, the method proceeds to step 240 where the behaviour models are updated as required. For example if the behaviour models are based on statistical analysis, details of the subject's behaviour may be added to those models.

If the behaviour of the subject is deemed to be atypical, details of the behaviour are recorded and notified to a relevant party, e.g. care agency, emergency service etc according to the nature of the behaviour.

If the system is in learning mode, information derived from the monitoring in step 210 is used in step 240 to update one or more behaviour models 170 as part of the process of learning what is typical behaviour of the subject.

Information relating to atypical behaviour is also used to update the behaviour models. For example it is useful to compile statistics relating to atypical behaviour as well as typical behaviour. This is done at step 240. From step 240 the process returns to step 210.

### Identifying Typical/Atypical Behaviour

In a very simple example of identifying what is or is not typical behaviour for a subject, acceptable limits for parameters associated with behaviour patterns of the subject are established. Then the observed activity is compared with the loaded/updated typical behaviour models for the individual to determine if the activity is typical according to the various behaviour models. Specifically, current values for the parameters are obtained and a determination is made as to whether the current parameters are outside the acceptable limits. Practical examples are more complex.

The behaviour of a human subject may be modelled in many different ways in order to facilitate the detection of significant changes in behaviour.

In general, the behaviour of an individual is characterised by the manner in which they move around a space, interacting with objects and performing actions. Central to the task of monitoring behaviour is therefore the formation of some representation of recent behaviour capturing the significant aspects of this sequence of events.

Such a behaviour representation can be used to interrogate and perhaps update stored models of typical behaviours, and therefore representations and models are by necessity closely related. The range of possible behaviour representations and models is extremely diverse, with their complexity governed by the level of abstraction of the information they encode.

For example, behaviours may be represented as a time stamped sequence of 'high-level' events recognised by the system, for example "07:02:13 enter kitchen; 07:02:23 turn on kettle; 07:02:49 open fridge; ...". In such a scenario, behaviour models might consist of a database of typical event sequences together with acceptable time constraints whilst behaviour typicality might be assessed by matching the observed sequence against the typical sequences held within the database. Furthermore, the database of typical behaviours might be updated to include new event sequences or modified time constraints when a sufficient number of examples of an atypical behaviour have been observed.

Alternatively, behaviours may be characterised by a much lower-level representation, for example a fixed-length sequence of subject positions at fixed time intervals describing the path taken around a space. In such a scenario, behaviour models might consist of statistical models of probability density within the high-dimensional space defined by the fixed-length sequence whilst behaviour typicality might be assessed by interrogating the statistical model to determine the probability of the particular observed sequence. Furthermore, such statistical models could be continuously updated to incorporate new data such that typicality assessments were based on the evolving set of observed behaviours.

Clearly many other behaviour representations and modelling techniques are feasible, whilst a practical implementation might well employ a hierarchy of models operating across multiple levels of abstraction.

The following are examples of patterns of behaviour that are of interest from the point of view of monitoring the health of an individual. Each of these may be modelled so that atypical instances of any of these behaviours can be detected.

Pacing : Used in the sense of walking up and down nervously, as to expend nervous energy. There is an element of repetition so the system would detect an atypical amount of walking activity that is taken without rest and/or that tends to follow the same path repeatedly. The pacing may take place within a room, in which case a single detector would be sufficient to detect the pacing, or it may take place over a wider spatial area. If multiple detectors were used in the context of pacing from room to room, the system would detect an atypically long and unbroken chain of repeated room transition patterns.

Sleep pattern: the system would be monitoring the gross movements of a person in their bedroom. Generally speaking, most people will retire to bed at a similar time each night, make a similar number of trips to the bathroom, and rise at approximately the same time each morning. The system would detect the person getting into and out of the bed and entering or leaving the field of view. Departures from the typical pattern that persist over time could be related to health issues.

Fidgeting: the condition or an instance of being nervously restless, uneasy, or impatient. This might manifest itself as an increase in small movements when a person is normally 'at rest', for example, when a person is sitting in an armchair, the system could detect an increase in the typical number of small movements that are made. In bed, the same agitation could manifest as an increase in 'tossing and turning', which the system could detect, again as an increase in the expected number of small movements.

Slower activity: The system would monitor a person's walking speed and record this over time in the slower activity model. Slowed activity could well be related to a loss of mobility, which is a significant indicator of a decline in health. Sudden or gradual changes could both be significant.

Repetitive activity: In cases of dementia or confusion a person may exhibit obsessive checking behaviours that are indicative of a failing memory. If the system detects significant changes such as repeated visits to the door (to check it is locked) or to the stove (to check it is off) for example, this could be noted and flagged as a possible issue. As another example, a person who is lying on the floor repeatedly making failed attempts to rise could be said to be exhibiting repetitive behaviour. The interpretation would clearly be dependent on the location at which the activity occurs.

Increased/decreased time in certain locations: The system monitors the time spent by an individual in certain locations. An increase in the amount of time spent in a living room coupled with a decrease in time spent in the bedroom could indicate the onset of physical or psychological problems. Failure to use a kitchen at the usual times or a decrease in the amount of time spent in the kitchen could indicate that a person is not eating regularly, a significant health indicator. If a person stopped making trips away from the home this could also be a change directly related to physical or mental well-being.

Data may be transmitted to a relevant party at step 230 such as carer, security staff, family etc either visually, via the internet or mobile phone or other appropriate communication medium. This will be activated in the event of atypical behaviour within the space.

The system of figure 5 may also provide a visual indication of movement trails, including an indication of where activity or inactivity starts or stops. Subjects may be tracked from space to space (i.e. from field of view to adjacent field of view). These tracks will be of a monitored subject and will be observable remotely by a carer, security staff or other interested party, offering a variety of timelines or replay capabilities.

The algorithm used to process signals from the sensors will typically be able to discriminate between people and animals, this is useful for ignoring signals that emanate from pets. Subjects may be discriminated on the basis of size.

### Example Implementation

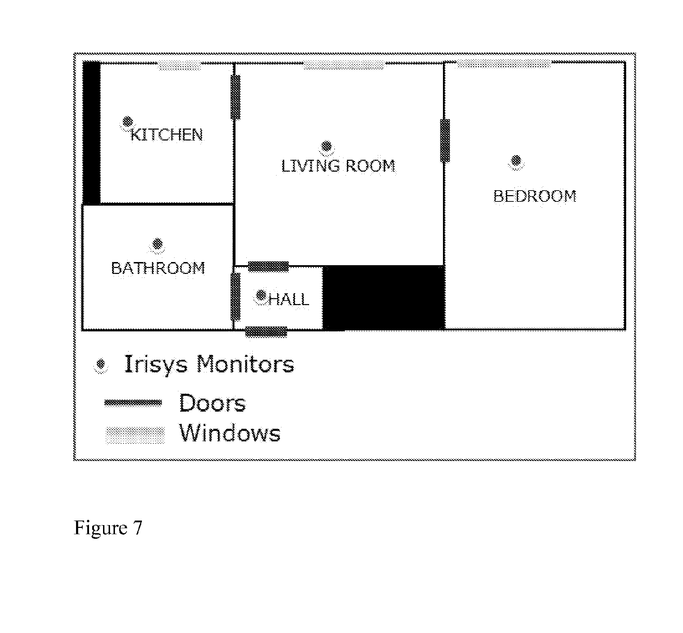

An example implementation will now be described with reference to figures 7 to 10. In this example a living space shown in figure 7 comprises five rooms: hall, bathroom, kitchen, living room and bedroom. One sensor is installed in each room, each sensor comprising an array of thermal detector elements as described above.

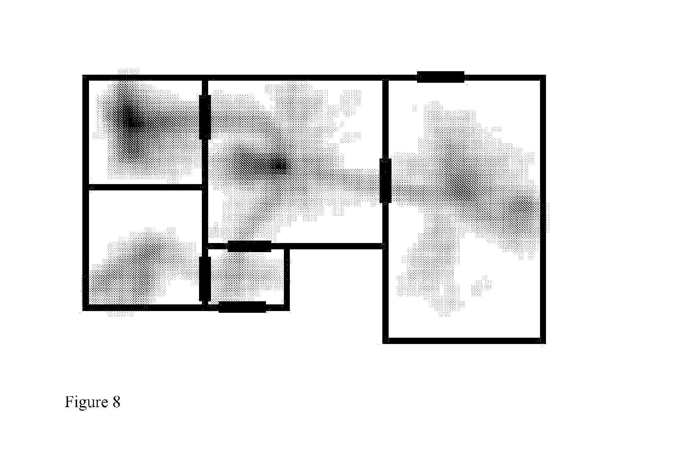

Figure 8 shows the sort of information that might be available from the sensors. Figure 8 has been obtained by compiling statistical data over time relating to the frequency of areas in each room being occupied. Each small square visible in figure 8 relates to a square on the ground (e.g. 1 metre x 1 metre) of the space being monitored. The information is in greyscale with the blackest areas being those most frequently occupied. Thus it can be seen that the two most frequently occupied areas for the period over which the data of figure 8 was accumulated are in the lounge, possibly the position of an arm chair, and the kitchen, possibly at the sink.

It will be immediately apparent that it is possible to compare an image of the kind shown in figure 8 generated for a typical behaviour pattern for the subject with a similar image compiled over a later time period. Changes in behaviour of the subject may be immediately apparent from this comparison.

It will also be apparent that by detecting only movements of the subject in the space, rather than generating images of the space, the data obtained is limited. For example facial features of the subject cannot be discerned. The presence of the sensor is more acceptable to the subject as a result of this.

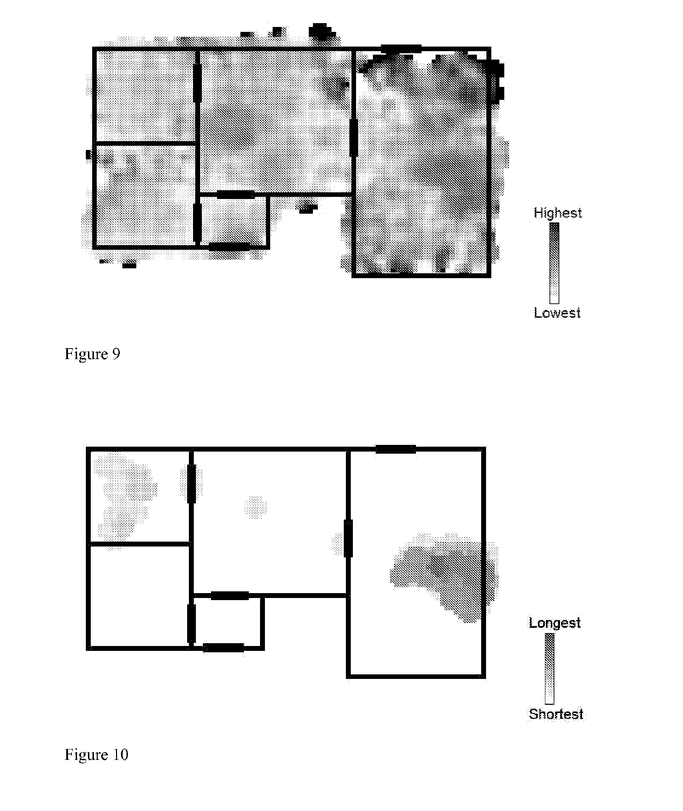

Data of the kind shown in figure 8 can be used to generate a probability map, an example of which is shown in figure 9. This shows, using different colours or shades for different probabilities, the probability that if the individual being monitored stops in a location they will remain inactive there for more than 5 seconds. It will be appreciated that similar probability maps can be derived for different periods of inactivity and other parameters of subject behaviour such as repeating activities. Thus in a more general sense, statistical data compiled over time can be used to determine the probability that the subject will carry out an activity (which can simply mean be present) in a part of the space for more than a predetermined time, or the probability that the subject will carry out an activity (which can simply mean be present) in a part of the space for less than a predetermined time.

The probability map can be used to determine when to trigger an alarm. It will be appreciated that different alarm conditions may apply to different parts of the space. Thus figure 10 shows an example alarm condition map for night time. Here it can be seen that a relatively long period of inactivity in bed will take place before an alarm is triggered whereas a shorter period applies in the kitchen where a period of inactivity might indicate that the individual has fallen. A different alarm condition map might apply during the day time.

The alarm may not be an audible alarm. It may be simply an alert to a third party monitoring the subject or space to telephone or visit the subject.

The methods and system may be extended to the detection, location, tracking and discrimination of multiple targets within a space. The sensor can be used to discriminate between multiple occupants of the spaces, for example by two spaced areas being occupied at the same time, and to detect the entry of third parties within the space. In the event that the third party is identified as unwanted (this could be determined from the time of day of appearance for example), action to safeguard the vulnerable person can be instigated.

Different alert levels may be applied depending on whether one or multiple subjects are present. For example if the subject is suspected of having fallen an alert might be suppressed or not generated if the subject is determined to have a visitor, who it may be assumed will offer any necessary assistance.

In the situation where data from a sensor is being compiled to establish a model of behaviour for the subject for the purpose of comparison, compilation of data, or "learning" might be suspended in the event that multiple subjects are present since signals generated in this period might not represent typical behaviour for the subject or space.

The specific example described above uses multiple sensors, one per room. It will be appreciated that the methods may use one sensor in one room such as a toilet cubicle. In the context of a system comprising multiple sensors the coverage between one sensor and another may not be contiguous. A benefit of a system of this type is that due to the reasoning applied contiguous coverage is not required. The high level reasoning will accommodate areas of the home between "covered" zones and zones that are not covered, i.e. not in the field of view of a sensor. These will typically be transition areas between covered zones. It is to be expected that a subject leaving one zone would appear again in the same or another connected zone in a relatively short time. Otherwise the subject is treated as having become unexpectedly inactive. Typically areas not in the field of view of sensors might be corridors or landings or stairs where people do not normally dwell. Alternatively in an elongated living room where the end with the door to the rest of the house has no chairs or dwelling places, so that people only pass through, only the other end of the room needs to be covered. Clearly, "uncovered" areas should be bounded by covered areas or be closed off and not include an exit from the area/home.

The methods might be used to monitor the activities of multiple subjects, for example in a situation where each of them has an allocated personal space. An example is a care home in which residents have their own rooms, possibly shared. Different residents can be treated in different ways depending on their individual patterns of behaviour. Thus individual care of residents can be provided in an automated way. In such an arrangement the activities of each subject would be monitored separately.

For example, a status dashboard or other visual display could be provided to represent each monitored room/premises perhaps by an indicator such as a Red, Amber or Green (RAG) indicator display representing status. The indicator need not be visual. It could be audible for example.

Normally indicators would be green or otherwise indicating no alert condition. If the system determined that a change had taken place then it might indicate Amber or Red depending on the severity of the condition.

This could happen for many different detectable situations eg: person not returned to bed in specified time; person exceeded other location specific inactivity threshold; person wandered off; other specific detectable event that requires action.

The alert status change may depend on categorising the occupant and vary from one person to the next rather than using a default or standard for that environment. For example a relatively able person might either not cause a change in status on getting out of bed at night or go to Amber, whereas a person at high risk of fall may change to Red straightway (supplemented by an alert eg sound) indicating that assistance should be provided immediately.

The status indicator could be provided on a visual display in a central office. Alternatively it could be provided to individual mobile devices such as hand held devices such as might be carried by staff at the facility.

In the foregoing it is assumed that sufficient information can be obtained from the sensors. However in some applications ancillary devices may be useful to augment information obtained from sensors. For example, a sensor on a door might be provided to indicate that a subject has entered a room or to provide additional confidence in an indication from a sensor that a subject has entered a room.

The monitoring of subjects as described in the foregoing is expected to provide a rich source of data for research purposes. Behaviour data from multiple sources can be compiled and analysed and is expected to provide insights into the behaviour of subjects in various circumstances that has not been available before.

The apparatus described above may be implemented at least in part in software. Those skilled in the art will appreciate that the apparatus described above may be implemented at least in part using general purpose computer equipment or using bespoke equipment. The hardware elements, operating systems and programming languages of such computers are conventional in nature, and it is presumed that those skilled in the art are adequately familiar therewith. Of course, any server functions may be implemented in a distributed fashion on a number of similar platforms, to distribute the processing load. Here, aspects of the methods and apparatuses described herein can be executed on a mobile station and on a computing device such as a server. Program aspects of the technology can be thought of as "products" or "articles of manufacture" typically in the form of executable code and/or associated data that is carried on or embodied in a type of machine readable medium. "Storage" type media include any or all of the memory of the mobile stations, computers, processors or the like, or associated modules thereof, such as various semiconductor memories, tape drives, disk drives, and the like, which may provide storage at any time for the software programming. All or portions of the software may at times be communicated through the Internet or various other telecommunications networks. Such communications, for example, may enable loading of the software from one computer or processor into another computer or processor. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible non-transitory "storage" media, terms such as computer or machine "readable medium" refer to any medium that participates in providing instructions to a processor for execution.

Hence, a machine readable medium may take many forms, including but not limited to, a tangible storage carrier, a carrier wave medium or physical transaction medium. Nonvolatile storage media include, for example, optical or magnetic disks, such as any of the storage devices in computer(s) or the like, such as may be used to implement the encoder, the decoder, etc. shown in the drawings. Volatile storage media include dynamic memory, such as the main memory of a computer platform. Tangible transmission media include coaxial cables; copper wire and fiber optics, including the wires that comprise the bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards, paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will appreciate that while the foregoing has described what are considered to be the best mode and, where appropriate, other modes of performing the invention, the invention should not be limited to specific apparatus configurations or method steps disclosed in this description of the preferred embodiment. It is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings. Those skilled in the art will recognize that the invention has a broad range of applications, and that the embodiments may take a wide range of modifications without departing from the inventive concept as defined in the appended claims.

## Claims

1. A method of monitoring behaviour of a subject comprising:
monitoring the movements of the subject within a space using at least one sensor comprising a two dimensional array of thermal detector elements,
processing signals from the sensor(s) to determine current values for one or more parameters associated with one or more patterns of behaviour of the subject,
establishing one or more models of a pattern of subject behaviour for the subject and/or the space being monitored; and
using the current values and the established model(s) of a pattern of behaviour to identify aberrations from an established model for the subject and/or the space.

2. A method as claimed in claim 1 in which the establishing step comprises using values for the one or more parameters accumulated over a period of time to establish one or more models of a pattern of behaviour for the subject and/or the space being monitored.

3. A method as claimed in claim 1 or claim 2 in which the one or more models of a pattern of behaviour for the subject and/or the space being monitored are predetermined.

4. A method as claimed in any preceding claim in which the determination of current values for one or more parameters associated with the subject comprises compiling statistical data over time indicating the frequency of one or more subject behaviours in relation to multiple regions or points in the space whereby to ascertain a pattern of behaviour for the subject.

5. A method as claimed in any preceding claim in which one or more models of a pattern of subject behaviour for the subject and/or the space being monitored is established or updated by compiling statistical data over time indicating the frequency of one or more subject behaviours in relation to multiple regions or points in the space.

6. A method as claimed in claim 4 or claim 5 comprising using the statistical data to determine the probability of the subject performing one or more activities for multiple points or regions in the scene.

7. A method as claimed in any preceding claim in which the identifying comprises using different values of parameters to indicate aberrant behaviour for different points or regions in the scene.

8. A method as claimed in any preceding claim comprising using different values of parameters to indicate aberrant behaviour for different time periods.

9. A method as claimed in any preceding claim including establishing a model of a typical pattern of one or more of the following:
sleeping;
fidgeting;
speed of activity;
pacing;
repeating activities; and
dwelling or remaining motionless at any point.

10. A method as claimed in any preceding claim in which the one or more parameters comprises one or more of:
percentage of time spent active,
average distance travelled,
the speed of movement of the subject from one location to another,
an amount of time dwelling or motionless,
a number of repetitions of a particular activity,
frequency of movement of limbs whilst at a particular location,
linearity of movement between locations within the space,
the speed of movement of the subject towards the ground,
a number of repetitions of movement along a path within the space,
the time at which a particular activity is carried out, and
an amount of time absent from the space.

11. A method as claimed in any preceding claim in which one or more of the sensors is sensitive only to movements of the subject taking place within its field of view.

12. A method as claimed in any preceding claim in which the array(s) of detector elements comprise(s) no more than 10,000 detector elements.

13. A method as claimed in any preceding claim in which the detector elements comprise pyroelectric detector elements.

14. A system for identifying changes in behaviour of a human subject configured to perform the steps of the method of any preceding claim comprising one or more sensors, one or more processors for processing signals from the sensors and data.

15. A computer readable medium comprising instructions that when executed by a processor in a system comprising one or more sensors and data storage cause the system to execute the steps of the method of any one of claims 1 to 13.
